# EUROPEAN PATENT SPECIFICATION

(11) **EP 3 131 183 B1**
(45) Date of publication and mention of the grant of the patent: **07.10.2020**
(21) Application number: 15180739.3
(22) Date of filing: 12.08.2015
(51) Int. Cl.: H02K 5/18, H02P 9/10, H02K 11/00

(54) **AN ELECTRIC POWER GENERATOR**
STROMGENERATOR
GÉNÉRATEUR D'ÉNERGIE ÉLECTRIQUE

(43) Date of publication of application: 15.02.2017
(73) Proprietor: ABB Schweiz AG, 5400 Baden (CH)
(72) Inventor: Westerlund, Jan, 00380 Helsinki (FI); Jäppinen, Jari, 00380 Helsinki (FI); Mantere, Juhani, 00380 Helsinki (FI)
(74) Representative: Kolster Oy Ab

(56) References cited:
- WO-A1-2014/194464
- WO-A2-2015/075275
- GB-A- 1 508 793

## Description

### FIELD OF THE INVENTION

The invention relates to an electric power generator.

Electric power generators are used to produce electric power into a grid. The power sources used to drive electric power generators vary. Steam is one common power source used in electric power plants to drive turbines, whereby the turbines drive the electric power generators. Combustion engines can on the other hand be used to drive electric power generators. The combustion engine and the electric power generator are often mounted on a common platform forming a support structure.

An electric power generator comprises a rotating rotor and a stationary stator surrounding the rotor. The rotor may be a salient pole rotor, whereby each pole comprises a rotor winding. The stator comprises normally a stator core and a stator frame surrounding the stator core. The inner surface of the stator core comprises slots opening into the inner surface of the annular stator core. The stator winding is positioned in the slots. There are further back beams extending in the axial direction along the outer surface of the stator core. The back beams are welded to the outer surface of the stator core. The stator core is attached with fastening means the stator frame. The stator frame is attached with support elements to the support structure.

The electric power generator may comprise a separate exciter attached to the shaft of the electric power generator. A small AC generator is used as the separate exciter. The AC voltage of the separate exciter is rectified into AC voltage and conducted to the rotor winding in the electric power generator. The current flowing in the rotor winding produces a magnetic field around the rotor winding. The rotating rotor induces an alternating magnetic field in the stator winding. The alternating magnetic field produces an alternating current in the stator winding. The stator winding is connected to the output terminals of the electric power generator.

Generally in order to connect an electric power generator to the grid, the electric power generator must comply with grid code requirements of that particular location. One such grid code requirement is the fault ride through operation of the electric power generator for the entire duration of the grid event.

Several kinds of faults may occur during operation of the electric power generator such as voltage dip, voltage sag, or a short circuit at a point of interconnection with the power grid. In an event of fault certain types of electric power generators accelerate rapidly, loose synchronism during operation, and, consequently, fail the grid code fault ride through requirement. The grid code requirements of today require a fault ride through time of 250 ms for an electric power generator. This means that the electric power generator should stay in synchronism during the fault ride through time so that the electric power generator can be reconnected to the grid at any time during the fault ride through time.

US patent 8,471,534 discloses a power generation system that includes a prime mover configured to generate mechanical energy and a electric power generator configured to generate electrical power from the mechanical energy received from the prime mover. The electrical power generation system further includes a fault ride through switch electrically coupled in series between the power generator and a power grid. The fault ride through switch includes a first branch configured to carry the electrical power during normal operation conditions and includes an RC resonance circuit. The fault ride through switch also includes a multiphase transformer configured for providing voltage phases of different polarities to the LC resonance circuit. The fault ride through switch further includes a second branch coupled in parallel with the first branch and including a resistive element and an inductive element electrically coupled in series wherein the resistive element is configured to absorb the electric power during fault conditions.

US patent 8,692,523 discloses a power generation system including an electric power generator mechanically coupled to a turbine to generate electrical power. The system includes a fault ride through system having a variable resistor and a variable inductor. The variable resistor is connected in parallel across output terminals of the generator to absorb power from the generator during a grid fault condition. The variable inductor is connected between an output terminal of the generator and a power grid.

WO 2014/194464 discloses an electric power generator comprising a rotor and a stator. The rotor is rotatable around a longitudinal centre axis of rotation and comprising a rotor winding. The stator surrounds the rotor and comprises a stator core with a stator winding, and a stator frame surrounding the stator core housed in the frame. A connection space is formed within the electric power generator as a separate box attached to the stator frame. The generator comprises further a fault ride through circuit comprising a brake resistance and a switch. The fault ride circuit is connected to the rotor winding bus. Further prior-art is WO2015/075275 A2.

Fault ride through (FRT) systems are in prior art solutions separate entities positioned outside the electric power generator between the electric power generator and the electric grid.

### BRIEF DESCRIPTION OF THE INVENTION

An object of the present invention is to achieve an improved electric power generator.

The electric power generator according to the invention is defined in claim 1.

Fault ride through circuits are in prior art solutions separate entities that are positioned without the power generator. This has been a conscious choice in order to avoid any equipment that do not form a direct part of the electric power generator within the electric power generator. The idea has been to keep the electric power generator as clean as possible from external components.

There are, however, advantages in positioning a fault ride through circuit within the electric power generator. A component within the electric power generator becomes the responsibility of the supplier of the electric power generator. The buyer buys the electric power generator with the integrated FRT circuit and knows that the generator will as such satisfy the grid code requirements.

The integration of the fault ride through circuit into the generator makes it possible to use the cooling circuit of the generator to cool the fault ride through circuit. There is no need for a separate cooling arrangement for the fault ride through circuit.

The integration of the fault ride through circuit into the generator makes it possible to impregnate the stator and the brake resistance of the fault ride circuit in a single process. The brake resistance of the fault ride circuit can be attached to the outer surface of the stator after which the whole package is impregnated. The integrated brake resistance can be made more compact i.e. smaller isolation distances can be used for a higher voltage compared to the situation in a separate fault ride through circuit. The brake resistance also becomes more rigid when it is impregnated.

The separate enclosures and other support structures needed in a separate fault ride through circuit may be dispensed with in a fault ride through circuit that has been integrated into the generator.

One advantageous position of the FRT circuit is on the outer surface of the stator core in the space between the axial back beams. The loops in the FRT brake resistance can in such case be positioned so that they run in the axial direction along the outer surface of the stator core. The loops of the FRT brake resistance could on the other hand be positioned so that they run along the circumference of the outer surface of the stator core. There would have to be openings in the lower surface of the back beams so that the wire could pass across the back beams. The position of the brake resistance on the outer surface of the stator core is advantageous in view of the cooling of the brake resistance and the switch. Cooling air passing in the radial direction through the air duct sheets of the stator core will also cool the brake resistance and the switch.

### BRIEF DESCRIPTION OF THE DRAWINGS

In the following the invention will be described in greater detail by means of preferred embodiments with reference to the attached drawings, in which
Fig. 1 shows a longitudinal cross section of an electric generator,
Fig. 2 shows a traverse cross section of the electric generator,
Fig. 3 shows an embodiment of a fault ride through circuit that can be used in the invention.

### DETAILED DESCRIPTION OF EMBODIMENTS OF THE INVENTION

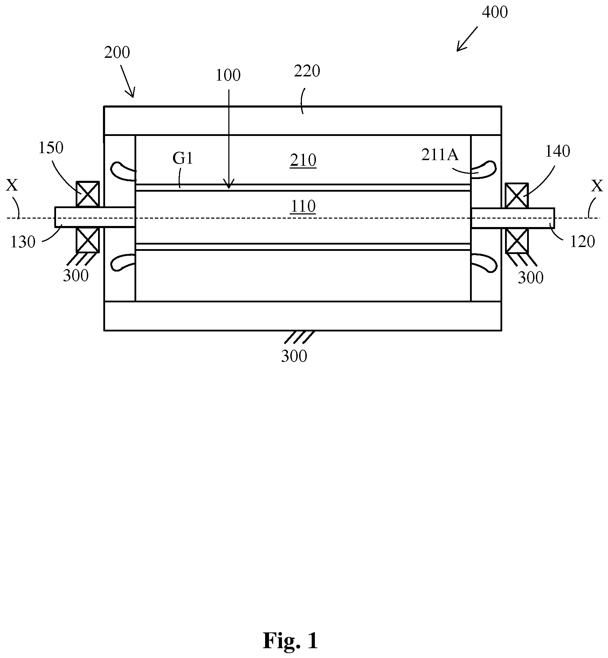

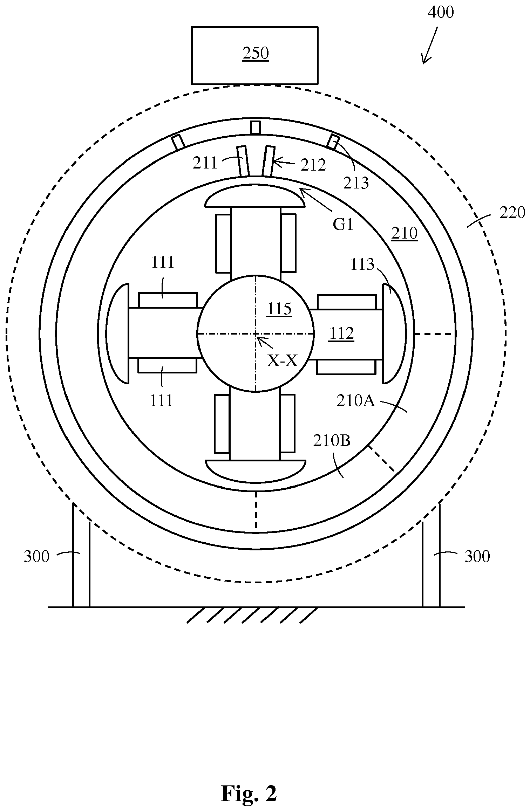

Fig. 1 shows a longitudinal cross section and Fig. 2 shows a traverse cross section of an electric power generator. The electric power generator 400 comprises a longitudinal centre axis X-X, a cylindrical rotor 100 and a cylindrical stator 200 surrounding the rotor 100. The longitudinal centre axis X-X of the rotor 100, the stator 200 and the electric power generator 400 coincide.

The rotor 100 comprises a centre portion 110 provided with a rotor winding 111 and two end portions 120, 130 at each axial X-X end of the centre portion 110. Each end portion 120, 130 of the rotor 100 is rotatably supported on a bearing 140, 150. The rotor 100 may be a salient pole rotor, whereby each pole comprises a pole body 112 and a pole shoe 113 at the radial outer end of the pole body 112. The radial inner end of the pole body 112 is attached to a shaft 115 of the middle portion 110 of the rotor 100. The rotor winding 111 is wound around the pole body 112 so that the winding wire passes in the axial X-X direction on a first axial X-X side of the pole body 112 and returns on a second opposite axial X-X side of the pole body 112. The winding ends 211A are thus formed on each axial X-X end of the pole body 112 where the winding wire passes from one axial X-X side of the pole body 112 to the other axial X-X side of the pole body 112. The pole body 112 and the pole shoe 113 are formed as one single entity.

The stator 200 comprises a stator core 210 and a stator frame 220 surrounding the stator core 210. The stator core 210 is attached to the stator frame 220 and the stator frame 220 is supported on a support structure 300. The stator core 210 can be attached with e.g. welding or with compression joints to the stator frame 220. The stator core 210 is further provided with a stator winding 211 having winding ends 211A shown in figure 1.

There is an air gap G1 between the outer surface of the middle portion 110 of the rotor 100 and the inner surface of the stator core 210.

The stator core 210 comprises slots 212 penetrating into the stator core 210 from the inner perimeter of the stator core 210. The slots 212 in the stator core 210 receive a stator winding 211. The stator core 210 may have a laminated structure being composed of annular sheets that are stacked together to form the stator core 210. The sheets are grouped into a number of groups in the axial X-X direction of the stator 200. Each group is separated by an air duct sheet, whereby radial air channels extending from an inner perimeter of the stator core 210 to an outer perimeter of the stator core 210 are formed by the air duct sheets. Each annular sheet in the stator core 210 can be made of sectors 210A, 210B, whereby the sectors 210A, 210B are attached to each other in order to form a closed perimeter. The stator core 210 comprises further back beams 213 attached to the outer surface of the stator core 210 and extending in the axial X-X direction along the outer surface of the stator core 210. The stator core 210 has a cylindrical form.

The stator frame 220 is only schematically shown in the figure. The stator core may be made of end plates at both ends of the stator frame 220 and frame plates positioned at an axial X-X distance from each other along the centre axis X-X of the generator 400 between the end plates. The frame plates may be attached to the stator core 210 and to a support structure 300 supporting the electric generator 400. A combustion engine driving the electric generator may be supported on the same support structure 300. The frame plates can be formed of continuous frame plates extending around the perimeter of the frame core 210 or of separate sectors positioned symmetrically along the perimeter of the rotor core 210. The frame plates in each sector are then attached to each other with axially X-X along an outer perimeter of the frame plates extending connection parts. The connection part and the frame plates in a sector form a frame plate package.

The axial X-X ends of the frame plate packages may be attached to a respective end plate with fastening means e.g. with bolts and nuts. The inner perimeter of the transverse cross section of the stator frame 220 may be of a circular form. The outer perimeter of the transverse cross section of the stator frame 220 may be of any form e.g. of a polygonal form.

The stator core 210 and the stator frame 220 can thus be manufactured independently simultaneously. The annular sheets of the stator core 210 are assembled to form the complete stator core 210 and then the stator winding 211 is wound into the slots 212 in the stator core 210. The stator frame is assembled from the end plates and the frame plates to form the complete stator frame 220. The stator core 210 is then attached to the stator frame 220. This can be done e.g. by L-shaped brackets. One branch of the brackets may be fastened with compression joints to the back beams 213 and the other branch may be fastened with compression joints to the frame plates. The compression joints in both branches can be achieved e.g. with bolts and nuts. Another possibility would be to use C-clamps on the back beams 213 and to attach the C-clamps by welding to the back beams 213 and the frame plates.

The electric power generator 400 comprises further a connection space 250 within the electric power generator 400. The connection space 250 may be formed as a separate box attached to the stator frame 220 or as an integral part of the stator frame 220. The stator winding 211 is connected to output terminals in the connection space 250. Electric power generated by the electric power generator 400 is transferred with wires connected to the output terminals in the connection space 250 directly or through a step-up transformer to the electric grid.

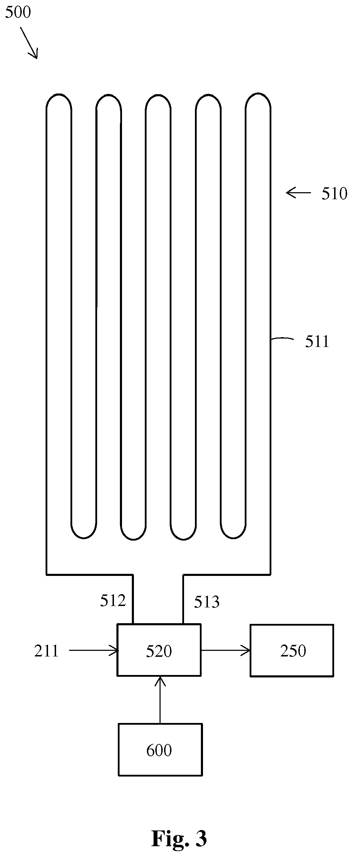

Fig. 3 shows an embodiment of a fault ride through circuit that can be used in the invention. The fault ride through circuit 500 comprises a brake resistance 510 and a switch 520. The switch 520 is configured to by-pass the brake resistance 510 in normal operation and to connect the brake resistance 510 in series with the stator winding 211 in a fault ride through situation in order to consume electric power produced by the electric power generator 400 during a period of at least 250 ms required by grid code requirements so that the electric power generator (400) maintains its synchronism during this period of 250 ms. The brake resistance 510 may simply be formed of an electric wire 511 in a zig-zag form as seen in the figure. The inductance of the brake resistance 510 should be as small as possible. The idea of the brake resistance 510 is only to consume the energy produced by the electric generator 400 during the required fault ride through (FRT) time 250 ms. The current flows in opposite direction in two adjacent branches of the zig-zag formed brake resistance 510, whereby the magnetic fields produced by the two opposite directed currents act in opposite directions. The brake resistance 510 can be dimensioned so that it is able to consume a reasonable amount of the generator power, e.g. about 6% of the generator power during the fault brake through time period of 250 ms. The ends 512, 513 of the wire 511 of the brake resistance 510 are connected to the switch 520. The switch 520 can be controlled by the automatic voltage regulator (AVR) 600 of the electric power generator 400. The brake resistance 510 is normally disconnected from the stator winding 211, whereby the stator winding 211 is connected to the output terminals in the connection space 250. The brake resistance 510 is in a FRT situation connected in series with the stator winding 211 so that the energy produced in the stator winding 211 is consumed in the brake resistance 510. This means that the electric generator 400 will stay in synchronism during the FRT time 250 ms.

The fault ride through circuit 500 could be positioned on the outer surface of the stator core 210 between the back beams 213. The wires in the loops of the brake resistance 510 would then run axially X-X on the outer surface of the stator core 210. Another possibility would be to position the brake resistance 510 to run along the outer circumference of the stator core 210. Openings would then be needed in the lower surface of the back beams 213 in order for the wire of the brake resistance 510 to be able to pass through. When the brake resistance 510 is positioned on the outer surface of the stator core 210 it can be impregnated together with the stator 200.

The switch 520 may be based on a traditional fast electromechanical switch or on a semiconductor switch. The switch 520 refers to the whole circuit needed to perform the switching of the brake resistance between the normal operation mode and the fault ride operation mode. The brake resistance is disconnected from the stator winding in normal operation mode and connected in series with the stator winding in fault ride operation mode. The switch 520 may be of any conventional design that is used in prior art separate fault ride through circuits.

The invention is not limited to the electric power generator shown in the figures, but can be used in any electric power generator fulfilling the requirements of the claims.

The invention and its embodiments are not limited to the examples described above but may vary within the scope of the claims.

## Claims

1. An electric power generator comprises:
a rotor (100) being rotatable around a longitudinal centre axis (X-X) of rotation and comprising a rotor winding (111),
a stator (200) surrounding the rotor (100) and comprising a stator core (210) with a stator winding (211) and a stator frame (220) surrounding the stator core (210),
a connection space (250) formed within the electric generator (400), said connection space (250) being formed as a separate box attached to the stator frame (220) or as an integrated part of the stator frame (220),
**characterized in that** the electric power generator further comprises:
a fault ride through circuit (500) comprising a brake resistance (510) and a switch (520), the switch (520) being configured to by-pass the brake resistance (510) in normal operation and to connect the brake resistance (510) in series with the stator winding (211) in a fault ride through situation in order to consume electric power produced by the electric power generator (400) during a period of at least 250 ms required by grid code requirements so that the electric power generator (400) maintains its synchronism during this period of 250 ms, wherein
the fault ride through circuit (500) is positioned within the electric generator (400) between the connection space (250) of the electric generator (400) and the stator winding (211) in a position where cooling air of the electric power generator (400) passes along the fault ride through circuit (500) so that the fault ride through circuit (500) becomes cooled with said cooling air.

2. An electric power generator according to claim 1, **characterized in that** the stator core (210) has a laminated structure being composed of annular sheets that are stacked together to form the stator core (210), the sheets being grouped into a number of groups in the axial (X-X) direction of the stator (200), each group being separated by an air duct sheet, whereby radial air channels extending from an inner perimeter of the stator core (210) to an outer perimeter of the stator core (210) are formed by the air duct sheets.

3. An electric power generator according to claim 1 or 2, **characterized in that** back beams (213) extending in the axial (X-X) direction are provided on the outer surface of the stator core (210).

4. An electric power generator according to any one of claims 1 to 3, **characterized in that** the fault ride through circuit (500) is positioned on the outer surface of the stator core (210).

5. An electric power generator according to any one of claims 1 to 4, **characterized in that** the brake resistance (510) in the fault ride through circuit (500) is formed of an electric wire (511) in a zig-zag form.

6. An electric power generator according to claim 5, **characterized in that** the loops of the electric wire (511) extend in the axial (X-X) direction along the outer surface of the stator core (210) between axially (X-X) on the outer surface of the stator core (210) extending back beams (213).

7. An electric power generator according to claim 5, **characterized in that** the loops of the electric wire (511) extend along the circumference of the outer surface of the stator core (210).

## Patentansprüche

1. Generator für elektrische Leistung der Folgendes umfasst:
einen Rotor (100), der um eine longitudinale Rotationsmittelachse (X-X) drehbar ist und eine Rotorwicklung (111) enthält,
einen Stator (200), der den Rotor (100) umgibt und einen Statorkern (210) mit einer Statorwicklung (211) und einen Statorrahmen (220), der den Statorkern (210) umgibt, enthält,
einen Verbindungsraum (250), der in dem elektrischen Generator (400) gebildet ist, wobei der Verbindungsraum (250) entweder als ein getrennter Kasten, der an dem Statorrahmen (220) befestigt ist, oder als ein integrierter Bestandteil des Statorrahmens (220) ausgebildet ist,
**dadurch gekennzeichnet, dass** der Generator für elektrische Leistung ferner Folgendes umfasst:
eine Fehlerdurchfahrungsschaltung (500), die einen Bremswiderstand (510) und einen Schalter (520) enthält, wobei der Schalter (520) konfiguriert ist, im Normalbetrieb den Bremswiderstand (510) zu umgehen und in einer Fehlerdurchfahrungssituation den Bremswiderstand (510) mit der Statorwicklung (211) in Reihe zu schalten, um elektrische Leistung, die durch den Generator (400) für elektrische Leistung erzeugt wird, während einer Zeitdauer von wenigstens 250 ms, wie sie von Stromnetz-Codeanforderungen gefordert wird, zu verbrauchen, so dass der Generator (400) für elektrische Leistung während dieser Zeitdauer von 250 ms seine Synchronizität aufrecht erhält, wobei
die Fehlerdurchfahrungsschaltung (500) in dem elektrischen Generator (400) zwischen dem Verbindungsraum (250) des elektrischen Generators (400) und der Statorwicklung (211) an einer Position angeordnet ist, an der Kühlungsluft des Generators (400) für elektrische Leistung sich längs der Fehlerdurchfahrungsschaltung (500) bewegt, so dass die Fehlerdurchfahrungsschaltung (500) mit der Kühlungsluft gekühlt wird.

2. Generator für elektrische Leistung nach Anspruch 1, **dadurch gekennzeichnet, dass** der Statorkern (210) eine laminierte Struktur besitzt, die aus ringförmigen Lagen gebildet ist, die übereinander gestapelt sind, um den Statorkern (210) zu bilden, wobei die Lagen in der axialen Richtung (X-X) des Stators (200) in zahlreiche Gruppen gruppiert sind, wobei die einzelnen Gruppen durch eine Luftkanallage getrennt sind, wobei durch die Luftkanallagen radiale Luftkanäle gebildet werden, die sich von einem inneren Umfang des Statorkerns (210) zu einem äußeren Umfang des Statorkerns (210) erstrecken.

3. Generator für elektrische Leistung nach Anspruch 1 oder 2, **dadurch gekennzeichnet, dass** Gegenträger (213), die sich in der axialen Richtung (X-X) erstrecken, auf der äußeren Oberfläche des Statorkerns (210) bereitgestellt sind.

4. Generator für elektrische Leistung nach einem der Ansprüche 1 bis 3, **dadurch gekennzeichnet, dass** die Fehlerdurchfahrungsschaltung (500) auf der äußeren Oberfläche des Statorkerns (210) positioniert ist.

5. Generator für elektrische Leistung nach einem der Ansprüche 1 bis 4, **dadurch gekennzeichnet, dass** der Bremswiderstand (510) in der Fehlerdurchfahrungsschaltung (500) aus einem elektrischen Draht (511) in Zickzack-Form gebildet ist.

6. Generator für elektrische Leistung nach Anspruch 5, **dadurch gekennzeichnet, dass** die Schleifen des elektrischen Drahts (511) in der axialen Richtung (X-X) längs der äußeren Oberfläche des Statorkerns (210) zwischen Gegenträgern (213), die sich auf der äußeren Oberfläche des Statorkerns (210) axial (X-X) erstrecken, verlaufen.

7. Generator für elektrische Leistung nach Anspruch 5, **dadurch gekennzeichnet, dass** die Schleifen des elektrischen Drahts (511) längs des Umfangs der äußeren Oberfläche des Statorkerns (210) verlaufen.

## Revendications

1. Générateur d'énergie électrique comprenant :
un rotor (100) pouvant tourner autour d'un axe central longitudinal (X-X) de rotation et comprenant un enroulement de rotor (111),
un stator (200) entourant le rotor (100) et comprenant un noyau de stator (210) avec un enroulement de stator (211) et un cadre de stator (220) entourant le noyau de stator (210),
un espace de raccordement (250) formé à l'intérieur du générateur électrique (400), ledit espace de raccordement (250) étant formé comme une boîte séparée fixée au cadre de stator (220) ou comme une partie intégrée du cadre de stator (220),
**caractérisé en ce que** le générateur d'énergie électrique comprend en outre
un circuit anti-panne (500) comprenant une résistance de freinage (510) et un commutateur (520), le commutateur (520) étant configuré pour contourner la résistance de freinage (510) en fonctionnement normal et pour raccorder la résistance de freinage (510) en série avec l'enroulement de stator (211) dans une situation anti-panne afin de consommer l'énergie électrique produite par le générateur d'énergie électrique (400) pendant une période d'au moins 250 ms requise par les exigences de code de réseau de sorte que le générateur d'énergie électrique (400) maintient son synchronisme pendant cette période de 250 ms,
le circuit anti-panne (500) étant positionné à l'intérieur du générateur électrique (400) entre l'espace de raccordement (250) du générateur électrique (400) et l'enroulement de stator (211) dans une position où l'air de refroidissement du générateur d'énergie électrique (400) passe le long du circuit anti-panne (500) de sorte que le circuit anti-panne (500) est refroidi par ledit air de refroidissement.

2. Générateur d'énergie électrique selon la revendication 1, **caractérisé en ce que** le noyau de stator (210) a une structure stratifiée composée de feuilles annulaires qui sont empilées ensemble pour former le noyau de stator (210), les feuilles étant regroupées en un certain nombre de groupes dans la direction axiale (X-X) du stator (200), chaque groupe étant séparé par une feuille de conduction d'air, de sorte que des canaux d'air radiaux s'étendant depuis un périmètre intérieur du noyau de stator (210) jusqu'à un périmètre extérieur du noyau de stator (210) sont formés par les feuilles de conduction d'air.

3. Générateur d'énergie électrique selon la revendication 1 ou 2, **caractérisé en ce que** des bras postérieurs (213) s'étendant dans la direction axiale (X-X) sont fournis sur la surface extérieure du noyau de stator (210).

4. Générateur d'énergie électrique selon l'une quelconque des revendications 1 à 3, **caractérisé en ce que** le circuit anti-panne (500) est positionné sur la surface extérieure du noyau de stator (210).

5. Générateur d'énergie électrique selon l'une quelconque des revendications 1 à 4, **caractérisé en ce que** la résistance de freinage (510) dans le circuit anti-panne (500) est formée d'un fil électrique (511) en forme de zigzag.

6. Générateur d'énergie électrique selon la revendication 5, **caractérisé en ce que** les boucles du fil électrique (511) s'étendent dans la direction axiale (X-X) le long de la surface extérieure du noyau de stator (210) entre des bras postérieurs (213) s'étendant axialement (X-X) sur la surface extérieure du noyau de stator (210).

7. Générateur d'énergie électrique selon la revendication 5, **caractérisé en ce que** les boucles du fil électrique (511) s'étendent le long de la circonférence de la surface extérieure du noyau de stator (210).
